# EUROPEAN PATENT APPLICATION

(11) **EP 0 848 562 A2**
(43) Date of publication of application: **17.06.1998**
(21) Application number: 97309944.3
(22) Date of filing: 10.12.1997
(51) Int. Cl.: H04Q 7/20

(54) **Method and system for disconnecting a wireless telephone call**

(30) Priority: 11.12.1996 US 33307 P
(71) Applicant: Texas Instruments Incorporated, Dallas, Texas 75265 (US)
(72) Inventor: Roark, Charles W., Plano, TX 75075 (US)
(74) Representative: Holt, Michael

(57) **Abstract**

A method is provided for disconnecting a telephone call. In the method, either a disconnect signal or an on-hook signal is received for a telephone call. The same disconnect call processing is performed in response to the received signal.

## Description

### TECHNICAL FIELD OF THE INVENTION

This invention relates in general to telecommunication systems, and more particularly, to single disconnect call processing for both far end and near end disconnects.

### BACKGROUND OF THE INVENTION

Modern telecommunications systems utilize a combination of hardware facilities and software techniques, methods, processes, and applications in order to complete a call between a local telephone at a "near end" and a remote telephone at a "far end." When the call is over, it can be terminated at either the far end, as indicated by a disconnect signal, or the near end, as indicated by an on-hook signal. In prior systems, disconnect signals were treated differently from on-hook signals. More specifically, separate hardware facilities and/or software techniques and routines were used to perform disconnect call processing for each of disconnect and on-hook signals. In many cases, the separate hardware and/or software resources were very similar and unnecessarily redundant. Furthermore, as the complexity of a telecommunications system increases, the opportunity for problems (e.g., electrical shorts, software glitches, incompatible software, etc.) generally increases. Thus, the provision of separate hardware and/or software for disconnect and on-hook signals expanded the opportunity for problems in prior systems.

### SUMMARY OF THE INVENTION

In accordance with the present invention, the disadvantages and problems associated with previous methods and systems for disconnecting a telephone call have been substantially reduced or eliminated.

According to an embodiment of the present invention, a method is provided for disconnecting a telephone call. The method includes the following steps: receiving either a disconnect signal or an on-hook signal for the telephone call; and performing disconnect call processing in response to the received signal.

According to another embodiment of the present invention, a method is provided for disconnecting a telephone call in a local multipoint distribution services system. The method includes the following steps: receiving a disconnect signal at a remote terminal or an on-hook signal at a customer premises equipment unit for the telephone call; and performing disconnect call processing at each of the remote terminal, a base system, and the customer premises equipment unit in response to the received signal.

According to yet another embodiment of the present invention, a system is provided for disconnecting a telephone call. The system includes a processor coupled to a memory. The processor can receive a disconnect signal or an on-hook signal for the telephone call. The processor is operable to perform the same disconnect call processing in response to the received signal. The memory contains software for supporting disconnect call processing.

Various technical advantages are provided. For example, one technical advantage includes performing the same disconnect call processing for both far end and near end disconnects. In one embodiment, this is accomplished by receiving either a disconnect signal from a far end or an on-hook signal from a near end. The same hardware facilities and software techniques, method, processes, and applications are used to perform disconnect call processing in response to the received signal. Because separate hardware and software resources are not utilized for each of the disconnect signal and the on-hook signal, unnecessary redundancy is eliminated or substantially reduced. Furthermore, complexity is reduced, thereby decreasing the opportunity for problems to occur. Other technical advantages are readily apparent to one skilled in the art from the following figures, descriptions, and claims.

### BRIEF DESCRIPTION OF THE DRAWINGS

An embodiment of the invention will be described hereinafter, by way of example only, with reference to the accompanying drawings in which like reference numerals are used for like features and in which:
FIGURE 1 illustrates a local multipoint distribution services system;
FIGURE 2 is a diagram illustrating communication between elements of the local multipoint distribution services system illustrated in FIGURE 1 during local origination call processing;
FIGURES 3A through 3C are flow diagrams of related methods for allocating transmission resources during local origination call processing;
FIGURE 4 is a diagram illustrating communication between various elements of the local multipoint distribution services system shown in FIGURE 1 during remote origination call processing;
FIGURES 5A through 5C are flow diagrams of related methods for allocating transmission resources during remote origination call processing;
FIGURE 6 is a diagram illustrating communication between various elements of the local multipoint distribution services system shown in FIGURE 1 during disconnect call processing for both near end and far end disconnects; and
FIGURES 7A through 7C are flow diagrams of related methods of a single disconnect call process for both near end and far end disconnects.

### DETAILED DESCRIPTION OF THE INVENTION

The same disconnect call processing is performed for a disconnect at either a near end telephone or a far end telephone. More specifically, the same hardware facilities and software routines, processes, techniques, and applications are used to support both a disconnect signal generated by and received from a remote telephone and an on-hook signal generated by and received from a local telephone. Because a separate disconnect call process is not performed for each of the near end and the far end disconnects, unnecessary redundancy and complexity within a telecommunications system is substantially eliminated or reduced.

The following describes performing single disconnect call processing within a local multipoint distribution services (LMDS) system for both far end disconnect and near end disconnect. An exemplary system is described in published European Patent document No. 0,715,478. It should be understood, however, that the present invention is not limited to such an exemplary embodiment. Thus, in an alternative embodiment, the present invention can be applied in a classic (i.e., wireline) telephony system or a cellular system to perform the same disconnect call processing for both far end and near end disconnects.

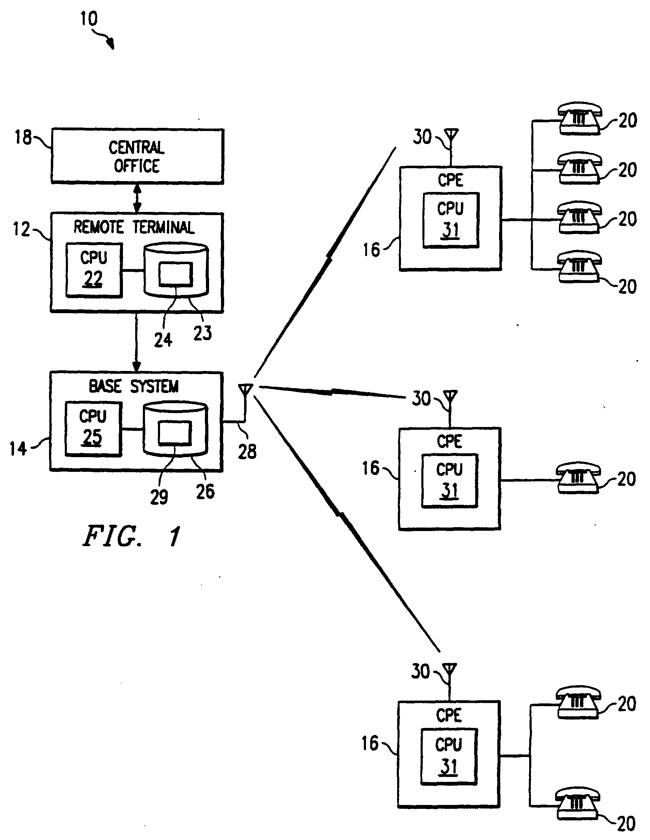

FIGURE 1 illustrates a local multipoint distribution services (LMDS) system 10. LMDS system 10 comprises a digital loop carrier (DLC) remote terminal 12, a base system 14, and one or more customer premises equipment (CPE) units 16. Generally, in one embodiment, LMDS system 10 functions to provide or support bi-directional communication, such as voice and/or data telephony, between a central office 18 and one or more telephones 20. LMDS system 10 also performs a single disconnect call process for both near end and far end disconnects.

In particular, LMDS system 10 can deliver telephone calls originating at a remote telephone coupled to central office 18 and directed to one of telephones 20, and also deliver telephone calls originating at one of telephones 20 and directed to a remote telephone coupled to central office 18. A remote telephone constitutes a far end device, whereas a telephone 20 constitutes a near end device. Transmission in the direction from far end to near end may be considered a "downstream" communication. Transmission from near end to far end is considered an "upstream" communication. When a call has been terminated at the near end, an on-hook signal is generated at a telephone 20 and then relayed upstream to the LMDS system 10. When a call is terminated at the far end, a disconnect signal may be received from central office 18 downstream by LMDS system 10. In response to either the on-hook signal or the disconnect signal, LMDS system 10 performs the same disconnect call processing as described below in more detail.

Within LMDS system 10, a given telephone call, corresponding to a particular Digital Signal level 0 (DS-0) signal, can be delivered over any of a number of time slots. Each time slot is contained within one of a number of frequencies. According to a time-division multiplexing (TDM) scheme, multiple time slots are multiplexed into each frequency, so that each frequency may support a Digital Signal level 1 (DS-1) signal. The frequencies and time slots constitute transmission resources which can be available for the delivery of any telephone call between central office 18 and telephones 20. The transmission resources are reused within LMDS system 10, and thus, are "shared" between telephones 20.

Referring to FIGURE 1, remote terminal 12 is coupled to central office 18. Remote terminal 12 generally functions to support the communication of LMDS system 10 with central office. Remote terminal 12 and central office 18 may communicate using a digital loop carrier signaling protocol. As shown, remote terminal 12 may include a central processing unit (CPU) 22 coupled to a memory 23. CPU 22, which can be implemented as any processor running suitable software or an application specific integrated circuit (ASIC), performs the processing functionality of remote terminal 12, including all suitable processing for disconnect call processing. Memory 23 may reside in a suitable storage medium, such as random access memory (RAM), read-only memory (ROM), disk, tape storage, or other suitable volatile or non-volatile data storage system. Memory 23 may include a relational database. Memory 23 may store information 24. Information 24 may support a disconnect call processing with various routines, techniques, processes, and applications. Information 24 may also specify which transmission resources (i.e., frequency and time slot) have been allocated for a particular call being delivered by LMDS system 10.

Base system 14 is coupled to, and may communicate with, remote terminal 12. Such communication may occur over a dedicated port, such as an RS-232 craft interface port. Base system 14 generally functions to assign and de-assign transmission resources for call delivery. Base system 14 may include a central processing unit (CPU) 25, a memory 26, and a transceiver 28. Like CPU 22 of remote terminal 12, CPU 25 of base system 14 can be implemented as any suitable processor running appropriate software. CPU 25 performs the processing functionality of base system 14, including the assignment and de-assignment of transmission resources. Memory 26 is coupled to CPU 25 and may reside in a suitable storage medium, such as RAM, ROM, disk, tape storage, or other suitable volatile or non-volatile data storage system. Memory 26 may comprise a relational database. Memory 26 may contain information 28. Information 28 may specify the transmission resources currently available for the delivery of a telephone call and the transmission resources currently being used for other telephone calls. Like information 24 contained within memory 23 of remote terminal 12, information 28 may also comprise software routines, techniques, methods, and applications supporting disconnect call processing.

Transceiver 28, which can be implemented as any suitable transceiver, functions to transmit and receive signals over the transmission resources. More specifically, transceiver 28 may transmit downstream at a particular frequency or range of frequencies. Such downstream frequency or range of frequencies may support a plurality of DS-1 signals. In one embodiment, twenty-four DS-1 signals may be supported by the downstream frequency or frequencies. Transceiver 28 may also receive signals over a plurality of upstream frequencies or range of frequencies. Each upstream frequency or range of frequencies, which may have smaller bandwidth than the downstream frequency or range of frequencies, may support a single DS-1 signal. Apart from the upstream and downstream frequencies supporting DS-1 signals, transceiver 28 may also utilize a common control or out of bound channel to convey overhead information, such as an on-hook signal or handshake information.

Each CPE unit 16 may be installed, maintained, and/or operated at an individual customer's premises, such premises being either commercial or residential. Each CPE unit 16 may be coupled to one or more telephones 20 with a hardwire connection. The number of CPE units 16 within LMDS system 10 may be adjusted according to the needs of a particular geographical area. For example, if a large number of customers are located in a given area, additional CPE units 16 can be provided. Furthermore, the number of telephones 20 coupled to a CPE unit 16 may vary according to the needs of the customer at whose site the CPE unit 16 is located. Each CPE unit 16 is operable to receive or detect an on-hook signal generated by any of the telephones 20 to which the CPE unit 16 is coupled.

As shown, each CPE unit 16 may include a transceiver 30 and a central processing unit (CPU) 31. Transceivers 30 support communication with base system 14 over the transmission resources. In particular, transceivers 30 receive signals at the downstream frequency or range of frequencies broadcast by transceiver 28 of base system 14. Furthermore, in order to deliver a particular call, each transceiver 30 may be tuned to transmit at one of the upstream frequencies or range of frequencies. Transceivers 30 may communicate overhead information, including an on-hook signal, with base system 14 utilizing the out of bound channel. The information within the out of bound channel may be passed through base system 14 directly to remote terminal 12. Each CPU 31 performs the processing functionality for the CPE unit 16 within which it is contained. Each CPU 31 may be implemented as any suitable processor.

Remote terminal 12, base system 14, and CPE units 16 support disconnect call processing for near end and far end disconnects. Within any, up to all, of the central processing units 22, 25, and 31, the same disconnect call processing is executed for both types of disconnect. The disconnect call processing is supported by the same hardware facilities and software methods, processes, techniques, and applications.

Generally, in operation, LMDS system 10 may receive a request for call delivery from either central office 18 or one of telephones 20. In response to such request, LMDS system 10 determines which transmission resources (i.e., frequencies and time slots) are available to deliver the call. If any resources are available, LMDS system 10 allocates a particular time slot and frequency for delivery. During delivery of the call, remote terminal 12 may perform normal call processing with central office 18. System level call processing for both base system 14 and CPE units 16 is "pass through." The call can be terminated at either the near end or the far end. For near end disconnect, LMDS system 10 receives an on-hook signal from telephone 20. For a far end disconnect, LMDS system 10 receives a disconnect signal from central office 18. In response to either of the on-hook signal or the disconnect signal, LMDS system 10 performs the same disconnect call processing routine. During disconnect call processing, the time slot and frequency (that were previously allocated) are de-allocated so that these transmission resources can be reused.

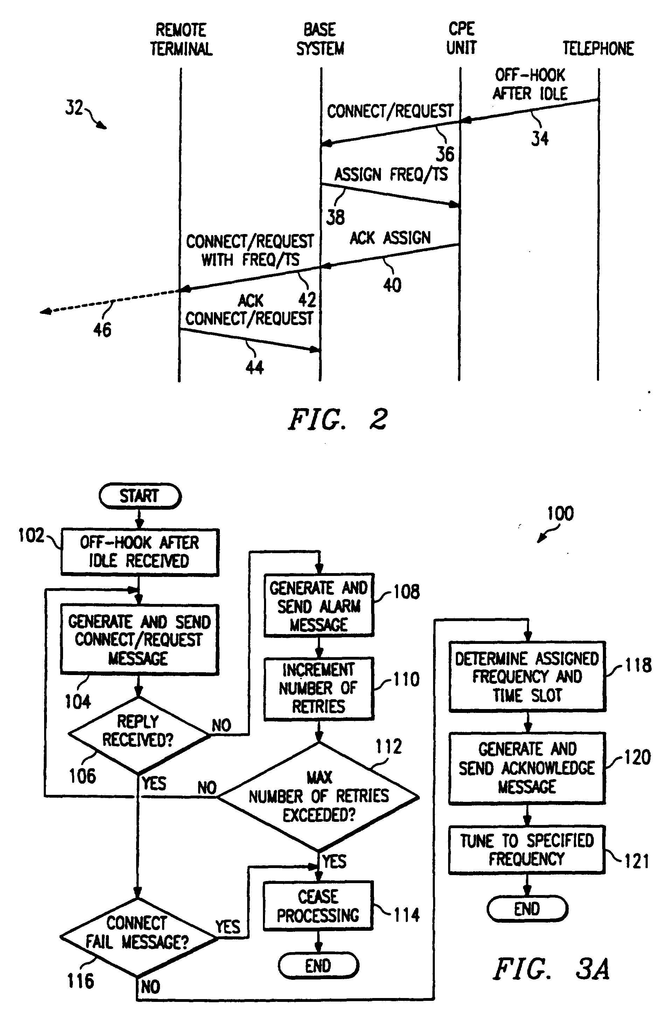

FIGURES 2 and 3A through 3C relate to the operation of LMDS system 10 as it may be used to perform processing for a call originating at one of telephones 20 coupled to a CPE unit 16. In such a case, hereinafter referred to as "local origination call processing," a customer of LMDS system 10 desires to call another party at a remote telephone coupled to central office 18.

FIGURE 2 is a diagram 32 illustrating communication among remote terminal 12, base system 14, and one of CPE units 16 during local origination call processing. Communication diagram 32 comprises a plurality of arrows 34 through 46, wherein each arrow represents transmission of a message or signal from one of the elements of LMDS system 10 to another element. The signaling and messaging represented by these arrows 34 through 46 are described in more detail with reference to FIGURES 3A through 3C.

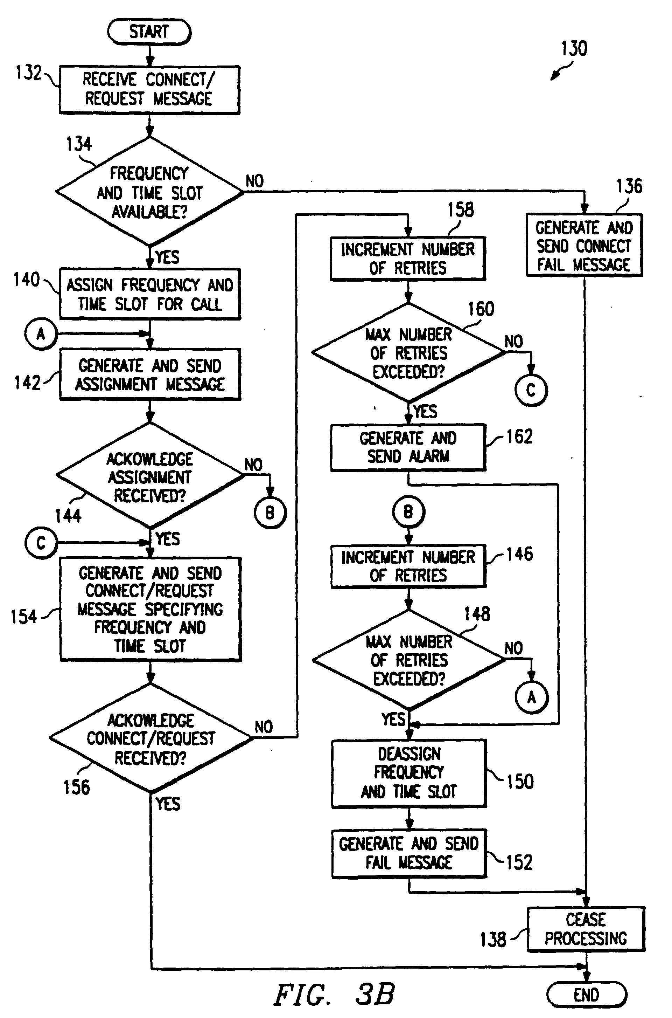

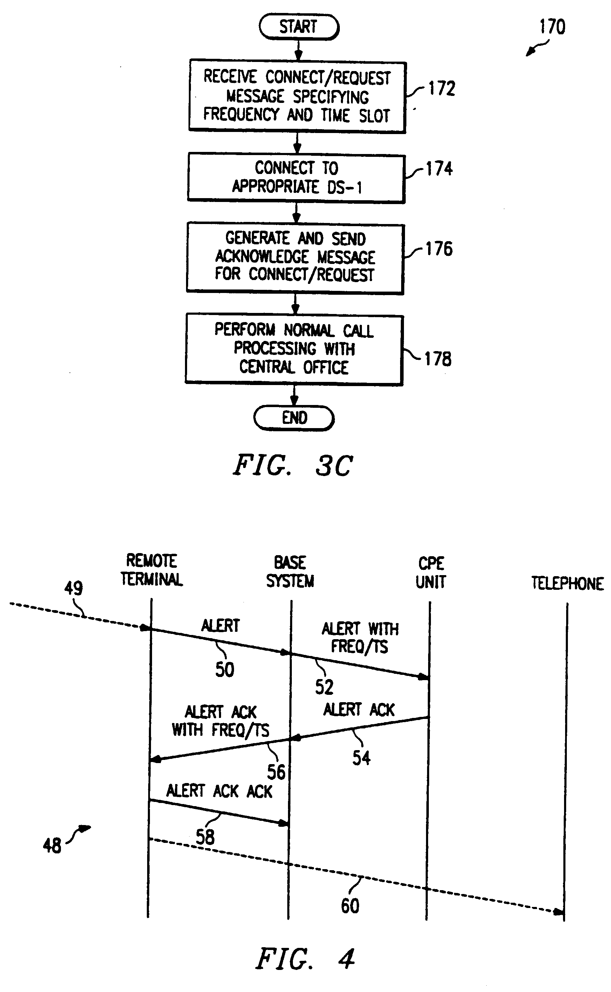

FIGURES 3A through 3C are flow diagrams of a plurality of related methods for allocating transmission resources (i.e., frequency and time slot) in LMDS system 10 during local origination call processing. FIGURES 3A, 3B, and 3C correspond to the operation of a CPE unit 16, base system 14, and remote terminal 12, respectively, during local origination call processing.

FIGURE 3A is a flow diagram of a method 100 corresponding to the operation of a CPE unit 16 during local origination call processing. Method 100 begins at step 102 where a CPE unit 16 receives an off-hook after idle signal from a telephone 20 to which the CPE unit 16 is connected. An off-hook after idle signal indicates that a user, such as a customer, at telephone 20 desires to initiate a telephone call. The off-hook after idle signal can be relayed by telephone 20 to CPE unit 16, as indicated by arrow 34 in FIGURE 2.

In response to the off-hook after idle signal, CPE unit 16 generates and sends a connect/request message to base system 14 at step 104. The connect/request message may be relayed over a time slot dedicated for overhead signals. The transmission of the connect/request message corresponds to arrow 36 in FIGURE 2.

At step 106, CPE unit 16 determines whether a reply has been received from base system 14. This reply may either be a connect-fail message or an assignment message, as explained below. If no reply has been received, CPE unit 16 generates and sends an alarm message at step 108. The alarm message functions to alert an appropriate entity, such as a system administrator, that a problem has arisen in LMDS system 10.

At step 110, CPE unit 16 increments a number corresponding to the number of retries attempted by CPE unit 16 for the generation and transmission of a connect/request message. CPE unit 16 determines whether the maximum number of retries has been exceeded at step 112. This maximum number may be configured by a user of system 10. If the maximum number of retries has not been exceeded, CPE unit 16 returns to step 104 where it again generates and sends a connect/request message. On the other hand, if the maximum number of retries has been exceeded, CPE unit 16 ceases processing at step 114 and method 100 ends.

Referring again to step 106, if it is determined that a reply has been received from base system 14, CPE unit 16 determines whether the reply is a connect-fail message at step 116. A connect-fail message may indicate that either base system 14 or remote terminal 12 of system 10 is unable to make a connection for the call. In some cases, the connect-fail message may be generated when transmission resources, such as frequencies and/or time slot, are unavailable for communication between CPE unit 16 and base system 14. If at step 116 it is determined that the reply is a connect-fail message, CPE unit 16 ceases processing at step 114, and method 100 ends.

On the other hand, if the reply is not a connect-fail message, the message may be an assignment message, which is represented by arrow 38 in FIGURE 2. An assignment message specifies the transmission resources (frequency and time slot) that have been assigned for communication between base system 14 and CPE unit 16 during the call. At step 118, CPE unit 16 determines the assigned frequency and time slot. CPE unit 16 generates and sends an acknowledge message for the assignment at step 120. At step 121, CPE unit 16 tunes to the specified frequency, thus, enabling CPE unit 16 to communicate with base system 14 for the telephone call. Method 100 then ends.

FIGURE 3B is a flow diagram of a method 130 corresponding to the operation of base system 14 during local origination call processing. Method 130 begins at step 132 where base system 14 receives a connect/request message (indicated by arrow 36 in FIGURE 2) from the CPE unit 16. At step 134, base system 14 determines whether a frequency and time slot are available for the telephone call. If no frequency and time slot are available, base system 14 generates and sends a connect-fail message to CPE unit 16 at step 136. At step 138, base system 14 ceases processing, and method 130 ends.

On the other hand, if it is determined at step 134 that a frequency and time slot are available, base system 14 assigns a frequency and time slot for the call at step 140. Information for the assigned frequency and timeslot can be stored in memory 26 of base system 14. At step 142, base system 14 generates and sends an assignment message to the CPE unit 16, as indicated by arrow 38 in FIGURE 2. The assignment message specifies the frequency and time slot allocated by base system 14.

At step 144, base system 14 then determines whether an acknowledge assignment message (indicated by arrow 40 in FIGURE 2) has been received from CPE unit 16. If no acknowledgment has been received, base system 14 increments a number corresponding to the number of retries attempted by base system 14 for the generation and transmission of an assignment message at step 146. At step 148, base system 14 determines whether the maximum number of retries has been exceeded. If not, base system 14 returns to step 142 where it generates and sends an assignment message. On the other hand, if the maximum number of retries has been exceeded, base system 14 de-assigns the frequency and time slot previously allocated for the call at step 150. At step 152, base system 14 generates and sends a fail message to CPE unit 16. Base system 14 then moves to step 138 where it ceases processing, and method 130 ends.

Referring again to step 144, if it is determined that an acknowledgment for the assignment has been received, then at step 154, base system 14 generates and sends a connect/request message to remote terminal 12. The connect/request message, indicated by arrow 42 in FIGURE 2, specifies the frequency and time slot that has been assigned by base system 14. At step 156, base system 14 determines whether an acknowledgment (indicated by arrow 44 in FIGURE 2) for the connect/request has been received. If so, method 130 ends.

If at step 156 it is determined that no acknowledgment for the connect/request has been received, then at step 158, base system 14 increments a number corresponding to the number of retries it has attempted for the generation and sending of a connect/request message. At step 160, base system 14 determines whether a maximum number of retries has been exceeded. If not, base system 14 returns to step 154 where it generates and sends a connect/request message to remote terminal 18. On the other hand, if the maximum number of retries has been exceeded, base system 14 generates and sends an alarm at step 162. The alarm indicates that a problem has arisen in LMDS system 10. Base system 14 then moves to step 150, where it de-assigns the previously allocated frequency and time slot.

FIGURE 3C is a flow diagram of a method 170 corresponding to the operation of remote terminal 12 during local origination call processing. Method 170 begins at step 172, where remote terminal 12 receives a connect/request message (indicated by arrow 42 in FIGURE 2) from base system 14. The connect/request message specifies the frequency and time slot which have been assigned by base system 14 for a telephone call. Information for the frequency and time slot may be stored as part of information 24 in memory 23 of remote terminal 12.

In response to the connect/request message, remote terminal 12 connects to a suitable DS-1 line for connecting the call to central office 18 at step 174. Information for the DS-1 line may also be stored in memory 23.

Remote terminal 18 generates and sends an acknowledge message for the connect/request at step 176. The acknowledge message is represented by arrow 44 in FIGURE 2. Afterwards, at step 178, remote terminal 12 performs normal call processing so that the call originated at telephone 20 is delivered to central office 18 via LMDS system 10. Normal call processing is indicated by arrow 46 in FIGURE 2.

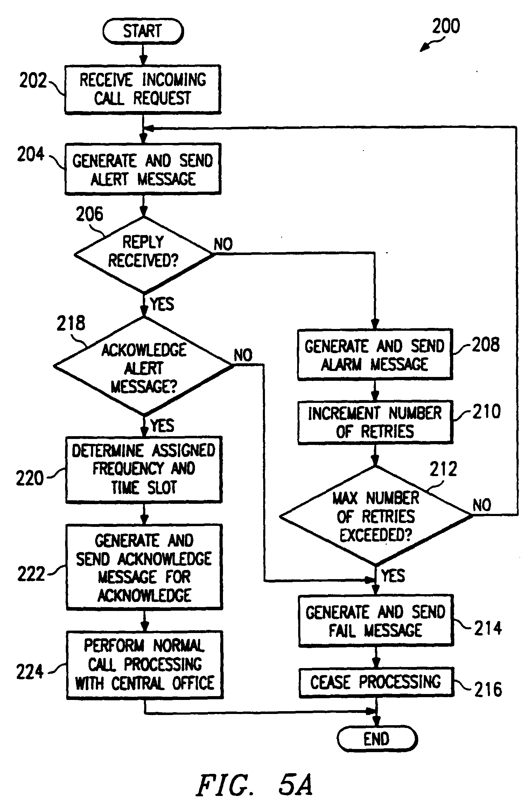

FIGURES 4 and 5A through 5C relate to the operation of LMDS system 10 as it may be used to deliver a call originating from a remote telephone (coupled to central office 18) to one of telephones 20. Hereinafter, this will be referred to as remote origination call processing. FIGURE 4 is a diagram 48 illustrating communication among remote terminal 12, base system 14, and a CPE unit 16 during remote origination call processing. Communication diagram 48 includes a plurality of arrows 49 through 60. Each of arrows 49 through 60 represents transmission of a message or signal from one of remote terminal 12, base system 14, CPE unit 16, central office 18, and telephone 20 to another one of these devices. The messaging and signaling are described in more detail with reference to FIGURES 5A through 5C.

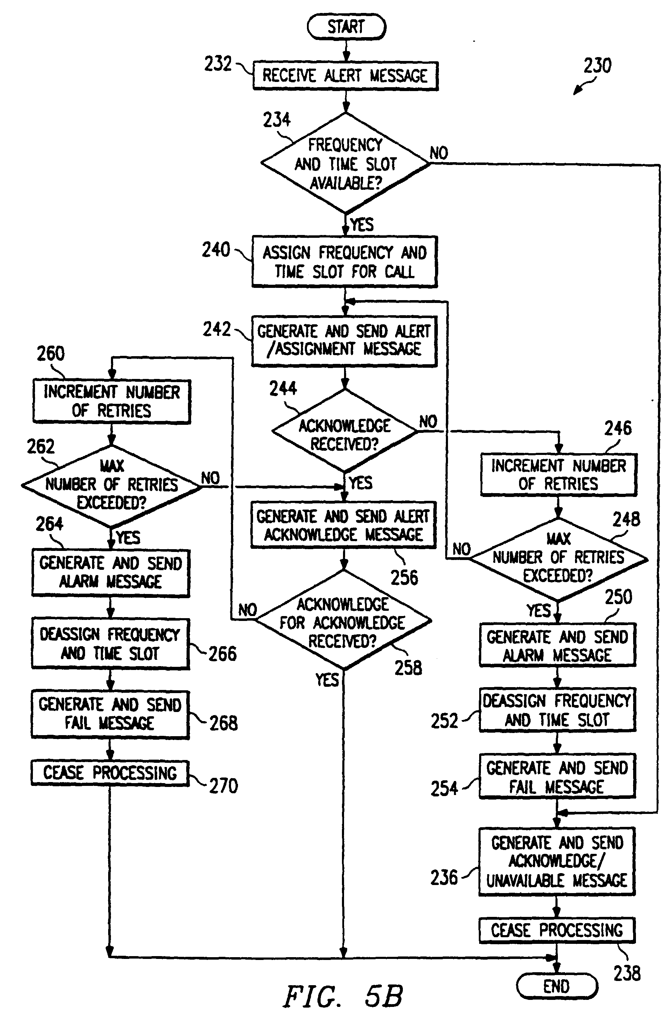

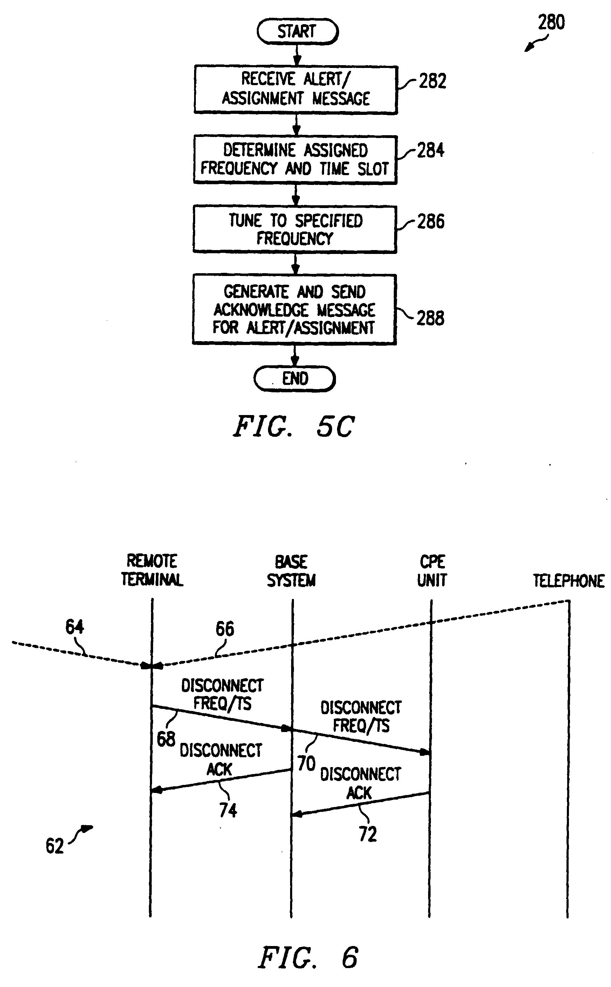

FIGURES 5A through 5C are flow diagrams of a plurality of related methods for allocating transmission resources during remote origination call processing. FIGURES 5A, 5B, and 5C correspond to the operation of remote terminal 12, base system 14, and a CPE unit 16, respectively.

FIGURE 5A is a flow diagram of a method 200 corresponding to the operation of remote terminal 12 during remote origination call processing. Method 200 begins at step 202 where remote terminal 12 receives an incoming call request from central office 18, as represented by arrow 49 in FIGURE 4. The incoming call request indicates that a party at a remote telephone coupled to central office 18 desires to make a call to a party at one of telephones 20. In response to the incoming call request, remote terminal 12 generates and sends an alert message to base system 14 at step 204. The alert message is represented by arrow 50 in FIGURE 4.

At step 206, remote terminal 12 determines whether a reply has been received from base system 14. A reply may be either an acknowledge alert message or an acknowledge/unavailable message, as explained below. If no reply has been received, remote terminal 12 generates and sends an alarm message at step 208. The alarm message functions to alert an appropriate entity, such as a system administrator, that a problem has arisen in LMDS system 10. At step 210, remote terminal 12 increments a number corresponding the number of retries that remote terminal 12 has attempted for the generation and sending of an alert message.

Remote terminal 12 then determines at step 212 whether a maximum number of retries has been exceeded. If not, remote terminal 12 returns to step 204 where it again generates and sends an alert message to base system 14. On the other hand, if the maximum number of retries has been exceeded, remote terminal 12 generates and sends a fail message to central office 18 at step 214. The fail message indicates to central office 18 that the call cannot be delivered at this time. At step 216, remote terminal 12 ceases processing, and method 200 ends.

Referring again to step 206, if it is determined that a reply has been received from base system 14, remote terminal 12 then determines whether the reply is an acknowledge alert message (as indicated by arrow 56 in FIGURE 4) at step 218. An acknowledge alert message specifies a frequency and time slot assigned by base system 14 for the telephone call. If the reply is not an acknowledge alert message, the message is an acknowledge/unavailable message which indicates that transmission resources are unavailable for call delivery at the current time. If an acknowledge/unavailable message has been received, remote terminal 12 moves to step 214 where it generates and sends a fail message to central office 18. On the other hand, if an acknowledge alert message has been received, remote terminal 12 determines the assigned frequency and time slot at step 220. Information for the assigned frequency and time slot can be stored as part of information 24 contained in memory 23 of remote terminal 12. At step 222, remote terminal 12 generates and sends an acknowledge message for the acknowledge to base system 14. The acknowledge message for the acknowledge is represented by arrow 58 in FIGURE 4.

At step 224, remote terminal 12 performs normal call processing with central office 18, as indicated by arrow 60 in FIGURE 4.

FIGURE 5B is a flow diagram of a method 230 corresponding to the operation of base system 14 during remote origination call processing. Method 230 begins at step 232 where base system 14 receives an alert message (represented by arrow 50 in FIGURE 4) from remote terminal 12. The alert message indicates to base system 14 that it is now desirable to deliver a call from central office 18 to one of telephones 20.

At step 234, base system 14 determines whether a frequency and time slot are available for the call. In one embodiment, a record of available frequencies and time slots is maintained within memory 26. If it is determined that a frequency and time slot are not available, base system 14 generates and sends an acknowledge/unavailable message to remote terminal 12 at step 236. The acknowledge/unavailable message indicates that a frequency and time slot are unavailable for delivery of the call. At step 238, base system 14 ceases processing, and method 230 ends.

On the other hand, if it is determined at step 234 that a frequency and time slot are available, base system 14 assigns a frequency and time slot for the call at step 240. The assigned frequency and time slot may be stored in memory 26 as part of information 29. At step 242, base system 14 generates and sends an alert/assignment message to the appropriate CPE unit 16. The alert/assignment message is represented by arrow 52 in FIGURE 4.

At step 244, base system 14 determines whether an acknowledgment (as represented by arrow 56 in FIGURE 4) has been received from CPE unit 16. If not, base system 14 increments a number corresponding to the number of retries it has attempted for generating and sending an alert/assignment message at step 246. At step 248, base system 14 determines whether a maximum number of retries has been exceeded. If not, base system 14 returns to step 242 where it generates and sends another alert/assignment message. On the other hand, if the maximum number of retries has been exceeded, base system 14 generates and sends an alarm message at step 250. The alarm message indicates that a problem has arisen in LMDS system 10. At step 252, base system 14 de-assigns the frequency and time slot previously allocated for the call. At step 254, base system 14 generates and sends a fail message to CPE unit 16. Base system 14 then moves to step 236 where it generates and sends an acknowledge/unavailable message to remote terminal 12.

Referring again to step 244, if it is determined that an acknowledgment has been received from CPE unit 16, base system 14 generates and sends an alert acknowledge message to remote terminal 12 at step 256. The alert acknowledge message, represented by arrow 56 in FIGURE 4, may specify the assigned frequency and time slot.

At step 258, base system 14 determines whether an acknowledge for the alert acknowledge message (as represented by arrow 58 in FIGURE 4) has been received from remote terminal 12. If so, method 230 ends. Otherwise, at step 260, base system 14 increments a number corresponding to the number of retries it has attempted for the generation and sending of an alert acknowledge message. At step 262, base system 14 determines whether a maximum number of retries has been exceeded. If not, base system returns to step 256 where it again generates and sends an alert acknowledge message to remote terminal 12. On the other hand, if the maximum number of retries has been exceeded, base system 14 generates and sends an alarm message at step 264. The alarm message functions to alerts an appropriate entity (e.g., a system administrator) that a problem has arisen in LMDS system 10.

At step 266, base system 14 de-assigns the previously allocated frequency and time slot. At step 268, base system 10 generates and sends a fail message to CPE unit 16. The fail message indicates to CPE unit 16 that the call cannot be delivered at the current time. At step 270, base system 14 ceases processing, and method 230 ends.

FIGURE 5C is a flow diagram of a method 280 corresponding to the operation of a CPE unit 16 during remote origination call processing. Method 280 begins at step 282 where CPE unit 16 receives an alert/assignment message (represented by arrow 52 in FIGURE 4) from base system 14. This message alerts CPE unit 16 that LMDS system 10 has received a request to deliver a call to a telephone 20 coupled to the CPE unit 16. The message may also specify the frequency and time slot assigned by base system 14 for the call.

At step 284, CPE unit 16 determines the assigned frequency and time slot. At step 286, CPE unit 16 tunes to the specified frequency. CPE unit 16 then generates and sends an acknowledge message for the alert/assignment at step 288. The acknowledge message, represented by arrow 54 in FIGURE 4, indicates that CPE unit 16 is ready to deliver a call to telephone 20. Method 280 then ends.

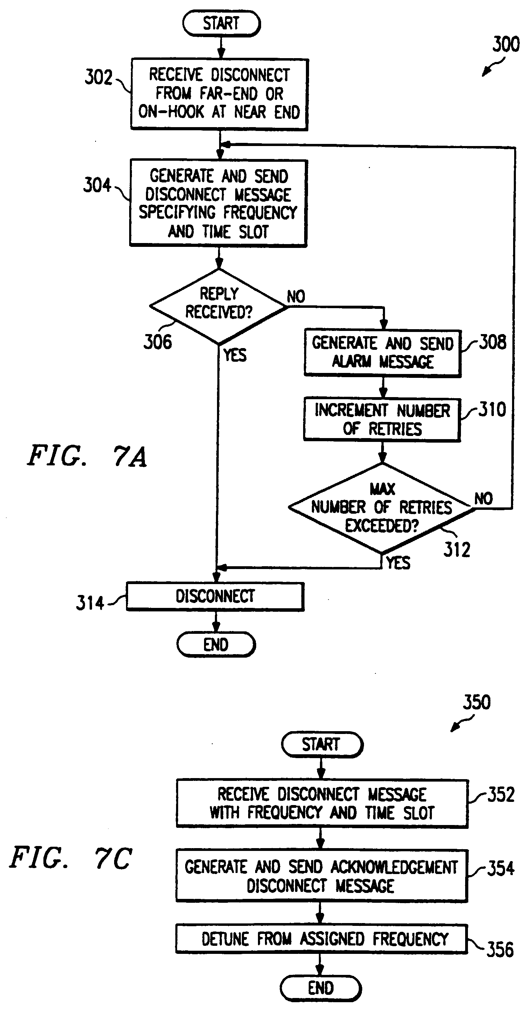

FIGURES 6 and 7A through 7C relate to the operation of LMDS system 10 as it can be used to perform disconnect call processing after a call has been terminated either at the near end (i.e., at a telephone 20) or the far end (i.e., at a remote telephone coupled to central office 18). The same elements, techniques, operations are utilized for disconnect call processing for either the disconnect signal or the on-hook signal. During disconnect call processing, in this embodiment, the frequency and time slot previously allocated for the call can be de-allocated. FIGURE 6 illustrates a communication diagram 62 having a plurality of arrows 64 through 72. Each of these arrows 64 through 72 represents transmission of a message or signal between two of remote terminal 12, base system 14, CPE unit 16, central office 18, and telephone 20 during the single disconnect call processing. Arrows 64 through 72 are explained below in more detail with reference to FIGURES 7A through 7C.

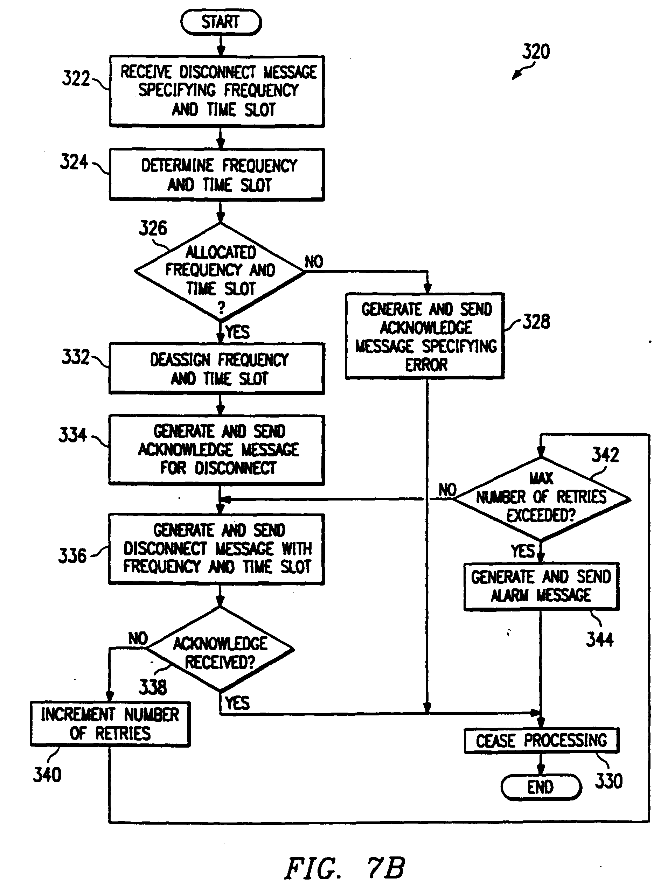

FIGURES 7A through 7C are flow diagrams of a plurality of related methods for disconnect call processing performed for both near end and far end disconnects. FIGURES 7A, 7B, and 7C correspond to the operation of remote terminal 12, base system 14, and a CPE unit 16, respectively.

FIGURE 7A is a flow diagram of a method 300 corresponding to the operation of remote terminal 12 during disconnect call processing. Method 300 begins at step 302 where remote terminal 12 receives a disconnect signal from either the far end (i.e., central office 18) or an on-hook signal from the near end (i.e., a telephone 20). Far end disconnect and near end on-hook signals are represented by arrows 64 and 66, respectively, in FIGURE 6. The near end on-hook signal may be contained within the out of bound channel and passed through base system 14 from CPE unit 16. The far end disconnect and near end on-hook signals indicate that the call has been terminated, and thus, transmission resources allocated for the call can be de-allocated so that the resources can be reused.

At step 304, remote terminal 12 generates and sends a disconnect message specifying the frequency and time slot that was allocated for the call to base system 14. The disconnect message is represented by arrow 68 in FIGURE 6. In one embodiment, information for the frequency and time slot would have been previously stored in memory 23 of remote terminal 12. In such an embodiment, this information may be purged from memory when the disconnect message is generated.

At step 306, remote terminal 12 determines whether a reply (represented by arrow 74 in FIGURE 6) has been received from base system 14. If no reply has been received, remote terminal 12 generates and sends an alarm message at step 308. The alarm message may alert a system administrator that problems have arisen. At step 310, remote terminal 12 increments a number corresponding to the number of retries that it has attempted for the generation and sending of a disconnect message. At step 312, remote terminal 12 determines whether the maximum number of retries has been exceeded. If not, remote terminal 12 generates and sends another disconnect message to base system 14 at step 304. On the other hand, if the maximum number of retries has been exceeded, remote terminal 12 disconnects at step 314, and method 300 ends.

FIGURE 7B is a flow diagram of a method 320 corresponding to the operation of base system 14 during disconnect call processing. Method 320 begins at step 322, where base system 14 receives a disconnect message (represented by arrow 68 in FIGURE 6) specifying frequency and time slot from remote terminal 12. Base system 14 determines the frequency and time slot that was allocated for the call to be disconnected at step 324.

At step 326, base system 14 determines whether the frequency and time slot specified by the disconnect message corresponds to one of the frequency and time slots previously allocated. Such information specifying previously allocated frequencies and time slots may be maintained in memory 26 as part of information 29. If the specified frequency and time slot do not correspond to a previously allocated frequency and time slot, then at step 328 base system 14 generates and sends an acknowledge message specifying that an error has occurred. At step 330, base system 14 ceases processing, and method 320 ends.

On the other hand, if the specified frequency and time slot correspond to an allocated frequency and time slot, then base system 14 de-assigns the frequency and time slot at step 332. The information about the assignment may also be purged from memory 26 at this time. At step 334, base system 14 generates and sends an acknowledge message for disconnect to remote terminal 12. The acknowledge message is represented by arrow 74 in FIGURE 6.

At step 336, base system 14 generates and sends a disconnect message to CPE unit 16. The disconnect message, represented by arrow 70 in FIGURE 6, may specify the frequency and time slot that was previously assigned for the call. At step 338, base system 14 determines whether an acknowledge has been received from CPE unit 16. If an acknowledge has not been received, base system 14 increments a number corresponding to the number of retries attempted for the generation and sending of a disconnect message at step 340.

At step 342, base system 14 determines whether the maximum number of retries has been exceeded. If not, base system 14 returns to step 336 where it generates and sends a disconnect message. On the other hand, if the maximum number of retries has been exceeded, base system 14 generates and sends an alarm at step 344. The alarm alerts an system administrator that problems may have arisen. Base system 14 then proceeds to step 330, where it ceases processing, and method 320 ends.

Referring again to step 338, if it is determined that an acknowledge was received, base system 14 proceeds to step 330 where it ceases processing, and method 320 ends.

FIGURE 7C is a flow diagram of a method 350 corresponding to the operation of CPE unit 16 during disconnect call processing. Method 350 begins at step 352 where CPE unit 16 receives a disconnect message (as represented by arrow 70 in FIGURE 6) from base system 14. The disconnect message may specify the frequency and time slot previously allocated for the call which it is now desirable to disconnect.

At step 354, CPE unit 16 generates and sends an acknowledge disconnect message to base system 14. The acknowledge disconnect message is represented by arrow 72 in FIGURE 6. CPE unit 16 then de-tunes from the assigned frequency at step 356, and method 350 ends.

Accordingly, the present invention provides that the same hardware facilities and software methods, techniques, processes, and applications can be used to perform disconnect call processing for both near end and far end disconnects. Because the near end and far end disconnects are not treated differently, and thus supported with separate hardware and software resources, redundancy and complexity are substantially reduced.

Although the present invention and its advantages have been described in detail, it should be understood that various changes, substitutions, and alterations can be made therein without departing from the spirit and scope of the present invention.

## Claims

1. A method for disconnecting a telephone call comprising the steps of:
receiving either a disconnect signal or an on-hook signal for the telephone call; and
performing disconnect call processing in response to the received signal.

2. The method of Claim 1, wherein the step of performing disconnect call processing comprises the steps of:
de-assigning a frequency and time slot previously allocated for the telephone call; and
de-tuning a customer premises equipment unit from the de-assigned frequency.

3. The method of Claim 1 or Claim 2, further comprising the step of relaying an on-hook signal in an out of bound channel.

4. The method of any of Claims 1 to 3, wherein the step of performing disconnect call processing comprises the step of purging information specifying an allocated frequency and time slot.

5. A method for disconnecting a telephone call in a local multipoint distribution services system, the method comprising the steps of:
receiving a disconnect signal at a remote terminal or an on-hook signal at a customer premises equipment unit for the telephone call; and
performing disconnect call processing at each of the remote terminal, a base system, and the customer premises equipment unit in response to the received signal.

6. The method of Claim 5, wherein the step of performing disconnect call processing comprises the steps of:
de-assigning at the base system a frequency and time slot previously allocated for the telephone call; and
de-tuning the customer premises equipment unit from the de-assigned frequency.

7. The method of Claim 5 or Claim 6, further comprising the step of relaying an on-hook signal in an out of bound channel between the customer premises equipment unit and the base system.

8. The method of any of Claims 5 to 7, wherein the step of performing disconnect call processing comprises the step of purging from a memory of the base system information specifying an allocated frequency and time slot.

9. A system for disconnecting a telephone call comprising:
a processor coupled to a memory, the processor operable to receive a disconnect signal or an on-hook signal for the telephone call, the processor further operable to perform disconnect call processing in response to the received signal.

10. The system of Claim 9, wherein the processor is associated with at least one of a remote terminal, a base system, and a customer premises unit of a local multipoint distribution services system.

11. The system of Claim 9 or Claim 10, further comprising a transmitter operable to transmit the on-hook signal over an out of bound channel between a customer premises unit and a base system of a local multipoint distribution services system.

12. The system of any of Claims 9 to 11, wherein the disconnect signal is routed to the processor through a remote terminal of a local multipoint distribution services system, the remote terminal coupled to a central office.

13. The system of any of Claims 9 to 12, wherein:
the memory is further operable to store information specifying an assigned frequency and time slot for the telephone call; and
the processor is further operable to purge the information specifying an assigned frequency and time slot.
